# FASCICULE DE BREVET EUROPEEN

(11) **EP 2 800 825 B1**
(45) Date de publication et mention de la délivrance du brevet: **05.06.2019**
(21) Numéro de dépôt: 13700272.1
(22) Date de dépôt: 04.01.2013
(51) Int. Cl.: C25B 11/00, C25B 11/03, C25B 11/04, H01M 4/88, C09D 11/52, H01M 4/86, C25B 1/10, C25B 9/08

(54) **ELECTRODE POREUSE POUR MEMBRANE ECHANGEUSE DE PROTONS**
PORÖSE ELEKTRODE FÜR PROTONENAUSTAUSCHMEMBRAN
POROUS ELECTRODE FOR PROTON EXCHANGE MEMBRANE

(30) Priorité: 06.01.2012 FR 1250163
(43) Date de publication de la demande: 12.11.2014
(73) Titulaire: Commissariat à l'Énergie Atomique et aux Énergies Alternatives, 75015 Paris (FR)
(72) Inventeur: VINCENT, Rémi, F-38000 Grenoble (FR); MAYOUSSE, Eric, F-38000 Grenoble (FR)
(74) Mandataire: GIE Innovation Competence Group
(86) Numéro de dépôt international: PCT/EP2013/050127
(87) Numéro de publication internationale: WO 2013/102675

(56) Documents cités:
- WO-A1-2012/043845
- US-A- 5 330 860
- US-A1- 2005 072 514
- US-A1- 2006 040 045
- US-A1- 2008 187 813
- US-A1- 2011 294 037

## Description

L'invention concerne la production de gaz par électrolyse, et en particulier les dispositifs de production d'hydrogène utilisant une membrane échangeuse de protons pour mettre en oeuvre une électrolyse à basse température de l'eau.

Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Du dihydrogène est utilisé comme carburant de la pile à combustible. Le dihydrogène est oxydé sur une électrode de la pile et du dioxygène de l'air est réduit sur une autre électrode de la pile. La réaction chimique produit de l'eau. Le grand avantage de la pile à combustible est d'éviter des rejets de composés polluants atmosphériques sur le lieu de génération d'électricité.

Une des difficultés majeures du développement de telles piles à combustible réside dans la synthèse et l'approvisionnement en dihydrogène. Sur terre, l'hydrogène n'existe en grande quantité que combiné à l'oxygène (sous forme d'eau), au soufre (sulfure d'hydrogène), à l'azote (Ammoniac) ou au carbone (combustibles fossiles de types gaz naturel ou pétroles). La production de dihydrogène nécessite donc soit de consommer des combustibles fossiles, soit de disposer de conséquentes quantités d'énergie à faible coût, pour l'obtenir à partir de la décomposition de l'eau, par voie thermique ou électrochimique.

Le procédé de production d'hydrogène à partir de l'eau le plus répandu consiste ainsi à utiliser le principe de l'électrolyse. Pour la mise en oeuvre de tels procédés, des électrolyseurs munis d'une membrane échangeuse de protons (dites PEM pour Proton Exchange Membrane en langue anglaise) sont connus. Dans un tel électrolyseur, une anode et une cathode sont fixées de part et d'autre de la membrane échangeuse de protons (pour former un assemblage membrane/électrodes) et mises en contact avec de l'eau. Une différence de potentiel est appliquée entre l'anode et la cathode. Ainsi, de l'oxygène est produit à l'anode par oxydation de l'eau. L'oxydation au niveau de l'anode génère également des ions H⁺ qui traversent la membrane échangeuse de protons jusqu'à la cathode et des électrons sont renvoyés à la cathode par l'alimentation électrique. Au niveau de la cathode, les ions H⁺ sont réduits au niveau de la cathode pour générer du dihydrogène.

En pratique, un tel électrolyseur comprend généralement des plaques d'alimentation disposées de part et d'autre de l'assemblage membrane/électrodes. Des collecteurs de courant sont disposés entre les plaques d'alimentation et l'assemblage membrane/électrodes.

Un tel dispositif d'électrolyse est confronté à des effets indésirables. Un enjeu d'un tel électrolyseur à membrane échangeuse de protons est d'accroître son rendement, d'augmenter sa durée de vie, de réduire son coût de fabrication et de garantir un niveau de sécurité élevé. Ces paramètres sont fortement dépendants du procédé de fabrication des électrodes.

Selon un premier type de procédé de fabrication d'une électrode, de l'encre catalytique est déposée en couche sur les collecteurs de courant. Du côté de l'anode, les surtensions nécessaires à l'électrooxydation de l'eau sont élevées. Ainsi le potentiel anodique de l'électrolyseur est en général très élevé (>1,6 VESH). L'utilisation de matériaux carbonés et notamment de couches de diffusion en carbone (feutre, papiers, tissus) est ainsi impossible (corrosion en CO₂), alors que de tels matériaux sont couramment utilisés du côté cathodique. Les collecteurs de courant du côté de l'anode sont généralement réalisés sous forme de pièces frittées en titane poreux ou sous forme de grilles de titane.

Le dépôt de l'encre électrocatalytique sur de tels collecteurs a pour inconvénient majeur de réduire leur porosité à l'eau, limitant ainsi le transport de l'eau jusqu'au catalyseur. De plus, une partie du matériau catalyseur ne participe pas à la réaction catalytique (et est donc en quantité inutilement importante) car localisé dans des pores du collecteur de courant. Aussi, l'interface électrode/membrane est relativement mauvaise du fait d'une surface efficace réduite de l'électrode. Ainsi, les performances de l'électrolyseur sont quelque peu bridées. En outre, la localisation du matériau catalyseur dans les pores du collecteur de courant rend le recyclage du catalyseur difficile. En effet, la séparation des métaux nobles des électrodes et des collecteurs de courant est particulièrement délicate. Par ailleurs, de tels collecteurs de courant nécessitent généralement des opérations d'usinage précises et coûteuses.

Pour résoudre certains de ces inconvénients, un second type de procédé de fabrication propose de déposer directement de l'encre électrocatalytique sur la membrane échangeuse de protons, de façon à former une couche formant une électrode.

Un tel procédé engendre une déformation par gonflement humide lors du dépôt de l'encre. Le procédé engendre ensuite une déformation par rétractation au séchage. Ces déformations sont non négligeables et engendrent des contraintes mécaniques au niveau des dépôts qui peuvent conduire à des craquelures de la couche électroactive formée. De telles craquelures réduisent la percolation électronique de l'électrode et réduisent ainsi sa conductivité électrique. De plus, les craquelures peuvent altérer la cohésion entre l'électrode et la membrane. Par ailleurs, lors du fonctionnement, la membrane est totalement immergée dans l'eau rendant son taux de gonflement maximal. Les contraintes mécaniques à l'interface entre l'électrode et la membrane sont ainsi maximales, induisant une détérioration accrue de l'électrode. Cette détérioration de l'électrode réduit le rendement énergétique de l'électrolyseur ainsi que sa durée de vie.

Un autre problème de la formation d'une électrode par dépôt catalytique sur la membrane est l'endommagement de cette membrane par les solvants présents dans l'encre (par exemple de l'éthanol ou de l'isopropanol). D'une part, les solvants engendrent une augmentation de la perméabilité de la membrane aux gaz. Une partie des gaz produits à l'anode et à la cathode traverse ainsi la membrane échangeuse de protons par diffusion. Cela induit d'une part des problèmes de pureté des gaz produits mais induit également des problèmes de sécurité. La proportion d'hydrogène dans l'oxygène doit notamment absolument rester inférieure à 4 %, une telle proportion étant la limite inférieure d'explosivité de l'hydrogène dans l'oxygène. D'autre part, l'endommagement de la membrane par les solvants réduit sa durée de vie.

Il existe aussi des procédés alternatifs, tel que celui proposé par la demande de brevet US 2005/0072514 A, qui utilise une technique de décalcomanie pour déposer une encre catalytique portée par une support sur la membrane, avant de la séparer de son support.

L'invention vise à résoudre un ou plusieurs de ces inconvénients. L'invention porte ainsi sur un procédé de fabrication d'une électrode catalytique telle que définie à la revendication 1.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe schématique d'un exemple de dispositif d'électrolyse selon l'invention ;
- les figures 2 à 5 illustrent différentes étapes d'un exemple de procédé de fabrication d'une électrode pour un tel dispositif d'électrolyse.

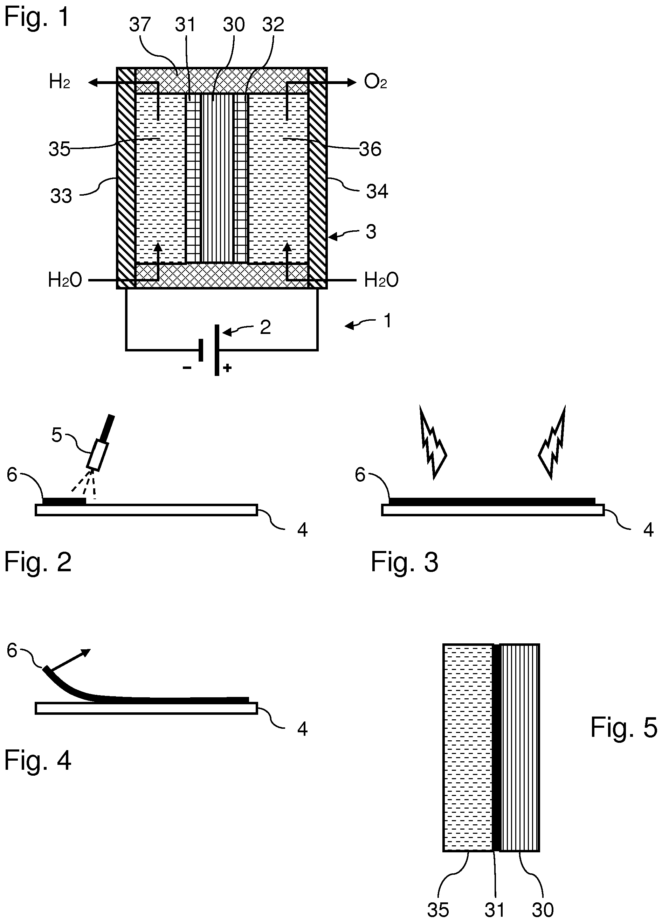

La figure 1 est une vue en coupe schématique d'un exemple de dispositif d'électrolyse 1 incluant deux électrodes selon l'invention. Le dispositif d'électrolyse 1 illustré est muni d'une membrane échangeuse de protons 30. Une anode 32 et une cathode 31 sont fixées de part et d'autre de la membrane échangeuse de protons 30. Le dispositif d'électrolyse 1 comprend en outre des collecteurs de courant poreux 35 et 36, en contact respectivement avec la cathode 31 et l'anode 32. Le dispositif d'électrolyse 1 comprend également des plaques d'alimentation électrique 33 et 34, en contact respectivement avec les collecteurs de courant 35 et 36. Le collecteur de courant 35 est ainsi interposé entre la plaque d'alimentation 33 et la cathode 31. Le collecteur de courant 36 est interposé entre la plaque d'alimentation 34 et l'anode 32. La membrane 30, la cathode 31, l'anode 32 et les collecteurs de courant 35 et 36. L'étanchéité du dispositif d'électrolyse 1 est en l'occurrence assurée par des plaques de serrage isolantes associées à un joint adapté 37.

La plaque d'alimentation électrique 33 présente un conduit d'alimentation en eau non illustré, en communication avec la cathode 31 par l'intermédiaire du collecteur de courant poreux 35. La plaque d'alimentation électrique 33 présente également un conduit d'évacuation de dihydrogène non illustré, en communication avec la cathode 31 par l'intermédiaire du collecteur de courant poreux 35.

La plaque d'alimentation électrique 34 présente un conduit d'alimentation en eau non illustré, en communication avec l'anode 32 par l'intermédiaire du collecteur de courant poreux 36. La plaque d'alimentation électrique 34 présente également un conduit d'évacuation de dioxygène non illustré, en communication avec l'anode 32 par l'intermédiaire du collecteur de courant poreux 36.

La membrane échangeuse de protons 30 sert à permettre le transfert des protons entre l'anode 32 et la cathode 31 et sert à séparer les gaz générés. La membrane échangeuse de protons 30 sert également d'isolant électronique entre l'anode 32 et la cathode 31. La membrane échangeuse de protons 30 peut par exemple être réalisée avec une membrane polymère d'acide perfluorosulfonique. De tels matériaux sont notamment distribués sous la référence commerciale Nafion par la société DuPont. Une telle membrane comprend fréquemment une épaisseur de l'ordre de 100 µm.

L'anode 32 et la cathode 31 sont mises en contact avec de l'eau. Une différence de potentiel est appliquée entre l'anode 32 et la cathode 31, par l'intermédiaire de la source électrique 2. La source de tension 2 est configurée pour appliquer une tension continue généralement comprise entre 1,3 V et 3,0 V, avec une densité de courant au niveau des plaques d'alimentation 33 et 34 généralement comprise entre 10 et 40 000 A/m².

Par application d'une telle tension, la réaction à l'anode 32 est la suivante :

2H₂O→4H⁺ + 4e⁻ + O₂

Une réaction d'oxydation de l'eau au niveau de l'anode 32 produit du dioxygène. L'oxydation au niveau de l'anode 32 génère également des ions H⁺ qui traversent la membrane échangeuse de protons 30 jusqu'à la cathode 31 et des électrons sont renvoyés à la cathode 31 par la source 2. Au niveau de la cathode 31, les ions H⁺ sont réduits pour générer du dihydrogène.

La réaction à la cathode 31 est ainsi la suivante :

2H⁺ + 2e⁻→ H₂

Selon l'invention, la cathode 31 et/ou l'anode 32 sont formées d'une couche qui ne forme ni un revêtement solidaire de la membrane 30, ni un revêtement solidaire d'un collecteur de courant 35 ou 36. La cathode 31 et l'anode 32 sont ainsi chacune formées d'une couche mécaniquement auto supportée.

La porosité à l'eau des collecteurs 35 et 36 est ainsi conservée. L'utilisation du matériau catalyseur des électrodes 31 et 32 est optimisée, ce qui accroît les performances du dispositif d'électrolyse 1. Le recyclage du dispositif d'électrolyse 1 est facilité du fait de l'absence de catalyseur dans les collecteurs de courant 35 et 36.

L'invention permet d'éviter les interactions entre la membrane 30 et les électrodes 31, 32 durant leur procédé de fabrication. On évite ainsi les déformations de la membrane 30 inhérentes à l'humidification et au séchage dus à l'application d'une encre sur celle-ci. Les craquelures des électrodes 31 et 32 sont ainsi évitées, de même que les dégradations de performance qui en découleraient. On évite ainsi également la dégradation de la membrane 30 par d'éventuels solvants utilisés pour la formation des électrodes 31 et 32. L'étanchéité de la membrane 30 aux gaz est ainsi améliorée.

Les figures 2 à 4 illustrent plus précisément différentes étapes d'un exemple de procédé de fabrication d'une électrode 31 ou 32 selon l'invention.

Lors d'une première étape illustrée à la figure 2, de l'encre électrocatalytique 6 est déposée en phase liquide sur un support 4. L'encre 6 peut être déposée par tout moyen approprié, par exemple par enduction, ou par projection au moyen d'une buse 5 comme illustré. Pour réaliser une électrode d'épaisseur homogène, l'encre 6 est avantageusement déposée sur un support 4 sensiblement plan et maintenu horizontal.

Comme détaillé ultérieurement, l'encre électrocatalytique 6 et le support 4 sont avantageusement réalisés de façon à présenter une adhérence réduite, et ce contrairement au but usuel d'obtenir une adhérence entre l'encre et une membrane ou un collecteur de courant. L'encre électrocatalytique 6 comprend d'une part un produit polymérisable en un polymère conducteur de protons, et d'autre part un matériau électrocatalytique. Le produit polymérisable est destiné à se solidifier pour fournir une certaine résistance mécanique à l'électrode et permettre également la diffusion de l'eau et des ions jusqu'au matériau électrocatalytique lorsque l'électrode est assemblée dans le dispositif de catalyse 1. Le produit polymérisable peut se présenter sous la forme de polymère en solution ou de ionomère.

Le matériau électrocatalytique présente des propriétés catalytiques adaptées pour la réaction catalytique à réaliser. Le matériau électrocatalytique peut se présenter sous la forme de particules ou de nano particules incluant des atomes métalliques. Le matériau catalyseur peut notamment comprendre des oxydes métalliques. Dans les formulations mentionnées ultérieurement, le matériau électrocatalytique est un oxyde d'iridium. Des métaux tels que le platine, l'or, l'argent, le cobalt, le ruthénium peuvent également être utilisés. L'encre électrocatalytique 6 inclut avantageusement un produit épaississant, par exemple du methylcellulose. Les différents composants de l'encre électrocatalytique 6 sont avantageusement en solution dans un solvant tel que de l'eau.

Pour limiter l'adhérence entre l'encre 6 et le support 4, celui-ci présente avantageusement une rugosité inférieure à 5 µm, et de préférence inférieure à 3 µm. Avantageusement, le support 4 comporte une énergie d'interface inférieure à 60 milliNewton/m, et de préférence inférieure à 45 milliNewton/m, afin de limiter l'adhérence avec l'encre solidifiée 6. Avantageusement, le support 4 comporte une énergie d'interface supérieure à 20 milliNewton/m, et de préférence au moins égale à 25 milliNewton/m, afin de limiter la formation de gouttes éparses avant la solidification de l'encre 6.

Pour limiter l'adhérence entre l'encre 6 et le support 4, l'encre déposée comporte une tension superficielle supérieure à l'énergie d'interface du support 4.

Lors d'une deuxième étape illustrée à la figure 3, l'encre électrocatalytique 6 déposée sur le support 4 est solidifiée. Le produit polymérisable réagit alors pour former un polymère. Un film formant l'électrode est ainsi formé sur le support 4. Le produit polymérisable est par exemple un ionomère.

L'étape de solidification de l'encre électrocatalytique peut mettre en oeuvre un séchage destiné à provoquer l'évaporation du solvant. Tout procédé de séchage connu en soi peut être utilisé, notamment au moyen d'un four ou d'un écoulement d'air chaud. L'encre électrocatalytique peut par exemple être séchée en la plaçant dans un environnement à une température comprise entre 50 et 150°.

Lors d'une troisième étape, l'électrode formée par l'encre solidifiée 6 est séparée du support 4. Cette séparation peut par exemple être réalisée par pelage ou décollage avec un effort réduit, du fait d'une faible adhérence entre l'encre solidifiée 6 par rapport au support 4. Une faible adhérence garantit une séparation sans risque de détérioration de l'électrode formée.

Afin de faciliter la manipulation de l'électrode lors de sa séparation du support 4, ainsi que sa tenue mécanique durant son utilisation ultérieure, la composition du produit polymérisable et sa proportion dans l'encre sont définis de sorte que l'électrode formée présente une résistance à la rupture supérieure à 1MPa, de préférence supérieure à 5MPa, typiquement comprise entre 1 et 15 MPa.

Une électrode ainsi formée présentera avantageusement une épaisseur comprise entre 2 et 20 µm, et de préférence entre 5 et 10 µm.

Lors d'une quatrième étape illustrée à la figure 5, une électrode ainsi formée est intégrée dans une cellule électrochimique, en l'occurrence un dispositif d'électrolyse. En l'occurrence, l'électrode formée est une cathode 31 et est insérée entre une membrane échangeuse de protons 30 et un collecteur de courant conducteur 35.

Avantageusement, on évite toute fixation au niveau de la partie médiane de l'électrode, afin de ne pas détériorer ses performances ou sa durée de vie. Avantageusement, l'électrode présente au moins 95% de sa surface dépourvue de liaison mécanique avec le collecteur de courant et de liaison mécanique avec la membrane. Avantageusement, l'électrode est maintenue en position par compression entre la membrane échangeuse de protons 30 et un collecteur de courant. Une pression comprise entre 0,05 et 1,5MPa pourra par exemple être appliquée sur l'électrode pour assurer son maintien en position.

Avantageusement, le matériau électrocatalytique inclut un produit épaississant. Ce produit épaississant comprend avantageusement du methylcellulose.

Par des essais, on a constaté qu'une proportion de produit épaississant, et en particulier du methylcellulose, comprise entre 2 et 10,5% de l'extrait sec de l'encre s'avérait particulièrement avantageuse pour favoriser la séparation entre l'encre solidifiée et le support 4. De façon optimale, cette proportion de produit épaississant est comprise entre 3 et 6 %, et de préférence entre 4 et 5 %.

Pour conserver des propriétés de diffusion de l'eau optimales dans l'électrode, la proportion du produit polymérisable dans l'encre est avantageusement définie de sorte que l'électrode formée présente une porosité comprise entre 20 et 40 %. L'encre 6 pourra avantageusement présenter une proportion de produit polymérisable comprise entre 20 et 30 % de son extrait sec.

Pour favoriser l'effet catalytique de l'électrode formée, la proportion de matériau électrocatalytique est avantageusement comprise entre 60 et 75 % de l'extrait sec.

Un premier exemple de formulation possible pour l'encre 6 est le suivant :

| **Produits** | **% Massique** | **% Massique (Extrait sec)** |
|---|---|---|
| IrO₂ | 12.3 | 69.9 |
| lonomère nafion DE2020 | 4.9 | 27.84 |
| Methylcellulose | 0.4 | 2.26 |
| Eau | 82.3 | |

Un deuxième exemple de formulation possible pour l'encre 6 est le suivant :

| **Produits** | **% Massique** | **% Massique (Extrait sec)** |
|---|---|---|
| IrO₂ | 12,3 | 68.33 |
| Ionomère nafion DE2020 | 4,9 | 27.22 |
| Methylcellulose | 0,8 | 4.44 |
| Eau | 82,0 | |

Un troisième exemple de formulation possible pour l'encre 6 est le suivant :

| **Produits** | **% Massique** | **% Massique (Extrait sec)** |
|---|---|---|
| IrO₂ | 12,2 | 64.21 |
| Ionomère nafion DE2020 | 4,8 | 25.26 |
| Methylcellulose | 2,0 | 10.53 |
| Eau | 81,0 | |

Dans les exemples mentionnés, les différents composants de l'encre sont en solution dans de l'eau. On peut cependant également envisager de disposer ces composants en solution dans de l'alcool ou dans des mélanges d'eau et d'alcool.

Dans le procédé de fabrication de l'électrode décrit précédemment, l'électrode est dépourvue de fibres de renforcement. Une telle absence de fibres de renforcement permet d'améliorer la perméabilité protonique de l'électrode est de maximiser la densité de matériau électrocatalytique intégrée. Cependant, on peut bien entendu envisager d'inclure des fibres de renforcement dans l'encre afin d'améliorer ses caractéristiques de résistance à la rupture.

Bien que l'exemple décrit illustre l'intégration d'une électrode dans un dispositif d'électrolyse, l'invention s'applique bien entendu également à l'intégration d'une telle électrode dans une pile à combustible. Une telle électrode peut alors être accolée à une membrane adaptée pour une telle pile à combustible, présentant par exemple une épaisseur de l'ordre de 25µm.

## Revendications

1. Procédé de fabrication d'une cellule électrochimique (1), comprenant les étapes de :
- dépôt d'une encre électrocatalytique sur un support, ladite encre incluant un matériau électrocatalytique et un produit polymérisable en un polymère conducteur de protons, ladite encre électrocatalytique (6) déposée comportant une proportion massique de produit polymérisable comprise entre 20 et 30 % de l'extrait sec de l'encre ;
- solidification de l'encre électrocatalytique de façon à former une électrode catalytique, la composition du produit polymérisable et sa proportion dans l'encre étant définis de sorte que l'électrode formée présente une résistance à la rupture supérieure à 1 MPa ;
- séparation entre l'électrode catalytique formée et le support ;
- insertion de l'électrode catalytique séparée de son support entre une membrane échangeuse de protons (30) et un collecteur de courant conducteur (35,36).

2. Procédé de fabrication d'une cellule électrochimique selon la revendication 1, dans lequel le support (4) sur lequel ladite encre électrocatalytique (6) est déposée présente une rugosité inférieure à 5 µm.

3. Procédé de fabrication d'une cellule électrochimique selon la revendication 1 ou 2, dans lequel le support (4) sur lequel ladite encre électrocatalytique (6) est déposée comporte une énergie d'interface comprise entre 20 et 60 mN/m.

4. Procédé de fabrication d'une cellule électrochimique selon l'une quelconque des revendications précédentes, dans lequel l'encre électrocatalytique (6) déposée comporte une tension superficielle supérieure à l'énergie d'interface du support.

5. Procédé de fabrication d'une cellule électrochimique selon l'une quelconque des revendications précédentes, dans lequel la proportion du produit polymérisable dans l'encre (6) est définie de sorte que l'électrode formée présente une porosité comprise entre 20 et 40 %.

6. Procédé de fabrication d'une cellule électrochimique selon l'une quelconque des revendications précédentes, dans lequel l'encre électrocatalytique (6) déposée comporte une proportion massique de methylcellulose comprise entre 2 et 10,5 % de l'extrait sec de l'encre, de préférence comprise entre 3 et 6%.

7. Procédé de fabrication d'une cellule électrochimique selon l'une quelconque des revendications précédentes, dans lequel l'encre électrocatalytique (6) déposée comporte une proportion massique de matériau électrocatalytique comprise entre 60 et 75 % de l'extrait sec de l'encre.

8. Procédé de fabrication selon l'une quelconque des revendications précédentes, dans lequel ladite étape de séparation est réalisée par pelage entre l'électrode formée (6) et le support (4).

9. Procédé de fabrication selon l'une quelconque des revendications précédentes, comprenant une étape de maintien en position de l'électrode catalytique (31,32) par compression de l'électrode catalytique entre la membrane échangeuse de protons (30) et le collecteur de courant (35,36).

## Patentansprüche

1. Verfahren zur Herstellung einer elektrochemischen Zelle (1), das die folgenden Schritte enthält:
- Aufbringen einer elektrokatalytischen Tinte auf einen Träger, wobei die Tinte ein elektrokatalytisches Material und ein in ein protonenleitendes Polymer polymerisierbares Produkt umfasst, wobei die aufgebrachte elektrokatalytische Tinte (6) einen Massenanteil von polymerisierbarem Produkt zwischen 20 und 30% der Trockensubstanz der Tinte aufweist;
- Verfestigung der elektrokatalytischen Tinte, um eine katalytische Elektrode zu bilden, wobei die Zusammensetzung des polymerisierbaren Produkts und sein Anteil in der Tinte so definiert sind, dass die gebildete Elektrode eine Reißfestigkeit von mehr als 1 MPa aufweist;
- Trennung zwischen der gebildeten katalytischen Elektrode und dem Träger;
- Einführen der von ihrem Träger getrennten katalytischen Elektrode zwischen eine Protonentauschermembran (30) und einen leitenden Stromkollektor (35, 36).

2. Verfahren zur Herstellung einer elektrochemischen Zelle nach Anspruch 1, wobei der Träger (4), auf den die elektrokatalytische Tinte (6) aufgebracht wird, eine Rauigkeit von weniger als 5 µm aufweist.

3. Verfahren zur Herstellung einer elektrochemischen Zelle nach Anspruch 1 oder 2, wobei der Träger (4), auf den die elektrokatalytische Tinte (6) aufgebracht wird, eine Oberflächenenergie zwischen 20 und 60 mN/m aufweist.

4. Verfahren zur Herstellung einer elektrochemischen Zelle nach einem der vorhergehenden Ansprüche, wobei die aufgebrachte elektrokatalytische Tinte (6) eine Oberflächenspannung größer als die Oberflächenenergie des Trägers aufweist.

5. Verfahren zur Herstellung einer elektrochemischen Zelle nach einem der vorhergehenden Ansprüche, wobei der Anteil des polymerisierbaren Produkts in der Tinte (6) so definiert wird, dass die gebildete Elektrode eine Porosität zwischen 20 und 40% aufweist.

6. Verfahren zur Herstellung einer elektrochemischen Zelle nach einem der vorhergehenden Ansprüche, wobei die aufgebrachte elektrokatalytische Tinte (6) einen Massenanteil von Methylcellulose zwischen 2 und 10,5% der Trockensubstanz der Tinte, vorzugsweise zwischen 3 und 6%, aufweist.

7. Verfahren zur Herstellung einer elektrochemischen Zelle nach einem der vorhergehenden Ansprüche, wobei die aufgebrachte elektrokatalytische Tinte (6) einen Massenanteil an elektrokatalytischem Material zwischen 60 und 75% der Trockensubstanz der Tinte aufweist.

8. Herstellungsverfahren nach einem der vorhergehenden Ansprüche, wobei der Trennschritt durch Abziehen zwischen der gebildeten Elektrode (6) und dem Träger (4) durchgeführt wird.

9. Herstellungsverfahren nach einem der vorhergehenden Ansprüche, das einen Schritt des Instellunghaltens der katalytischen Elektrode (31, 32) durch Komprimieren der katalytischen Elektrode zwischen der Protonentauschermembran (30) und dem Stromkollektor (35, 36) enthält.

## Claims

1. Process for manufacturing an electrochemical cell (1) comprising the steps of:
- depositing an electrocatalytic ink on a carrier, said ink including an electrocatalytic material and a product polymerizable into a protonically conductive polymer, said electrocatalytic ink (6) deposited comprising polymerizable product in a proportion by weight comprised between 20 and 30% of the solid content of the ink;
- solidifying the electrocatalytic ink so as to form a catalytic electrode, the composition of the polymerizable product and its proportion in the ink being defined so that the electrode formed has a tensile strength greater than 1 MPa;
- separating the catalytic electrode formed and the carrier;
- inserting the catalytic electrode separated from its carrier between a proton exchange membrane (30) and a conductive current collector (35, 36).

2. Process for manufacturing an electrochemical cell as claimed in Claim 1, in which the carrier (4) on which said electrocatalytic ink (6) is deposited has a roughness lower than 5 µm.

3. Process for manufacturing an electrochemical cell as claimed in Claim 1 or 2, in which the carrier (4) on which said electrocatalytic ink (6) is deposited has an interface energy comprised between 20 and 60 mN/m.

4. Process for manufacturing an electrochemical cell as claimed in any one of the preceding claims, in which the electrocatalytic ink (6) deposited has a surface tension higher than the interface energy of the carrier.

5. Process for manufacturing an electrochemical cell as claimed in any one of the preceding claims, in which the proportion of the polymerizable product in the ink (6) is defined so that the electrode formed has a porosity comprised between 20 and 40%.

6. Process for manufacturing an electrochemical cell as claimed in any one of the preceding claims, in which the electrocatalytic ink (6) deposited comprises methylcellulose in a proportion by weight comprised between 2 and 10.5% of the solid content of the ink and preferably comprised between 3 and 6% of the solid content of the ink.

7. Process for manufacturing an electrochemical cell as claimed in any one of the preceding claims, in which the electrocatalytic ink (6) deposited comprises electrocatalytic material in a proportion by weight comprised between 60 and 75% of the solid content of the ink.

8. Manufacturing process as claimed in any one of the preceding claims, in which said separating step is carried out by peeling the electrode (6) formed from the carrier (4).

9. Manufacturing process as claimed in any one of the preceding claims, comprising a step of holding the catalytic electrode (31, 32) in position by compressing the catalytic electrode between the proton exchange membrane (30) and the current collector (35, 36).
